Europäisches Patentamt

European Patent Office

Office européen des brevets

(11) Veröffentlichungsnummer: **0 466 020 A2**

# EUROPÄISCHE PATENTANMELDUNG

(21) Anmeldenummer: **91111081.5**

(51) Int. Cl.5: **G01N 27/406**

(22) Anmeldetag: **04.07.91**

(30) Priorität: **10.07.90 DE 4021929**

(43) Veröffentlichungstag der Anmeldung:
**15.01.92 Patentblatt 92/03**

(84) Benannte Vertragsstaaten:
**DE ES FR GB IT NL SE**

(71) Anmelder: **ABB PATENT GmbH
Kallstadter Strasse 1
W-6800 Mannheim 31(DE)**

(72) Erfinder: **Schumann, Bernd, Dr.
Kupferwiesenstrasse 31**
**W-7017 Gerlingen(DE)**
Erfinder: **Baier, Gunar, Dr.
Am Rheinauer See 197
W-6800 Mannheim 81(DE)**
Erfinder: **Puhane, Anton
Leisberg 55
W-6900 Heidelberg(DE)**

(74) Vertreter: **Rupprecht, Klaus, Dipl.-Ing. et al
c/o ABB Patent GmbH, Patentabteilung,
Postfach 10 03 51
W-6800 Mannheim 1(DE)**

(54) **Sensor.**

(57) Die Erfindung bezieht sich auf einen Sensor (10) zur Ermittlung von oxidbaren Gasbestandteilen in einem Abgas, das aus Verbrennungsmotoren oder -anlagen stammt. Der Erfindung liegt die Aufgabe zugrunde, einen Sensor (10) aufzuzeigen, der insbesondere in der Lage ist, den Wasserstoffanteil in Abgasen zu bestimmen. Der erfindungsgemäße Sensor (10) weist wenigstens eine erste Elektrode (1) auf, die elektrokatalytische Eigenschaften aufweist, welche die Reaktion von oxidbaren Gasbestandteilen aus dem Abgas mit Sauerstoffionen ermöglichen. Ferner ist eine zweite Elektrode (2) vorgesehen, die mit einem Referenzgas in Verbindung steht. Zur Ermittlung des Sauerstoffanteils in dem Abgas ist der Sensor (10) mit einer dritten Elektrode versehen. Sie ist in Bezug auf die Eltrolyse von oxidierbaren Gasbestansteilen inaktiv. Heizlemente (5) erlauben ein Betreiben des Sensors (10) in einem Temperaturbereich zwischen 500˚ C und größer 800˚ C.

Fig. 1

EP 0 466 020 A2

Die Erfindung bezieht sich auf einen Sensor zur Kontrolle von Abgasen aus Verbrennungsmotoren und Verbrennungsanlagen gemäß dem Oberbegriff des Patentanspruches 1.

Zur Energieeinsparung und Vermeidung von Umweltschäden ist eine Überwachung bzw. Regelung von Verbrennungsprozessen nötig. Die Messung des Sauerstoffgehaltes in den Abgasen allein kann keinen Hinweis auf eine unvollständige Verbrennung liefern. Vielmehr ist besonders wichtig, den Anteil der bei unvollständigen Verbrennungen auftretenden oxidbaren Gase kontrollieren zu können. Die bereits bekannten Vorrichtungen zur Bestimmung dieser Gasgehalte lassen sich entsprechend dem jeweils verwendeten Meßverfahren als katalytische bzw. resistive Systeme klassifizieren. In der DE-OS 31 27 431 ist ein katalytisches Verfahren beschrieben, bei dem die Messung der Wärmetönung durch das Oxidieren des brennbaren Gases in einem geeigneten Material erfolgt. Nachteilig an diesem Verfahren ist die geringe Selektivität und die Gefahr der Beeinträchtigung der katalytischen Eigenschaften durch die in dem Abgas enthaltenen übrigen Bestandteile. Bei den resistiven Verfahren wird die Widerstandänderung von Metalloxidhalbleitern, z.B. $SnO_2$, in Abhängigkeit von der Oberflächenbelegung durch die brennbaren Gase zur Messung genutzt. Nachteilig an diesem Verfahren ist, daß die Oberflächeneigenschaften durch Verschmutzung oder Vergiftung leicht beeinflußt werden können, und daher ein stabiles Meßverhalten in Abgasen nicht erreicht werden kann.

Der Erfindung liegt die Aufgabe zugrunde, einen Sensor aufzuzeigen, der in der Lage ist, den Anteil an oxidbaren Gasen, insbesondere an Wasserstoff selektiv zu bestimmen, und der zudem in seinem Aufbau sehr einfach gestaltet ist.

Diese Aufgabe wird erfindungsgemäß durch die Merkmale des Patentanspruches 1 gelöst.

Mit dem erfindungsgemäßen Sensor ist es möglich, den Wasserstoffanteil auch dann zu ermitteln, wenn Sauerstoff im Abgas enthalten ist. Die Vorrichtung ist selbst dann zur Bestimmung des Wasserstoffgehaltes geeignet, wenn der Sauerstoff in den für Verbrennungsprozesse typischen Konzentrationsbereichen von 0,1 bis 10% vorliegt. Der erfindungsgemäße Sensor kann zur Überwachung von Abgasen genutzt werden, die sowohl aus Verbrennungsmotoren als auch Verbrennungsanlagen stammen, in denen fosile Brennstoffe genutzt werden.

Weitere erfindungswesentliche Merkmale sind in den Unteransprüchen gekennzeichnet.

Die Erfindung wird nachfolgend anhand von schematischen Zeichnungen näher erläutert. Es zeigen:

Fig. 1    einen erfindungsgemäßen Sensor,

Fig. 2    einen Sensor mit drei Elektroden,

Fig. 3    eine Variante des in Fig. 2 dargestellten Sensors,

Fig. 4    einen flächig ausgebildeten Sensor,

Fig. 5    die Kennlinie des Sensors.

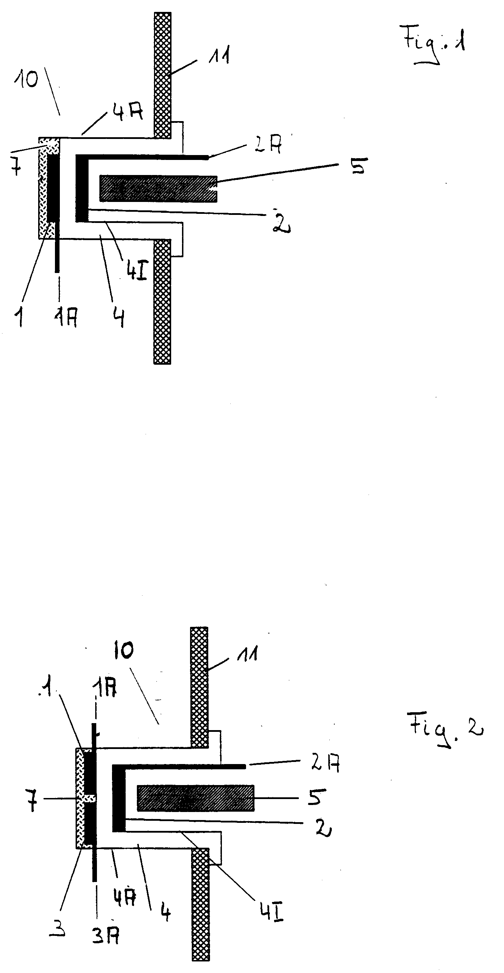

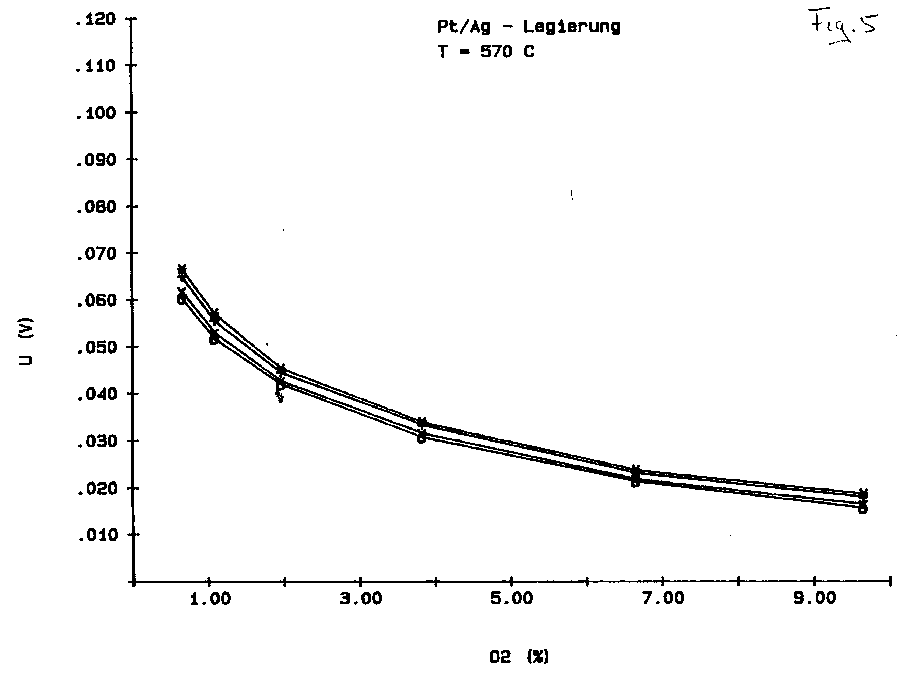

Der in Fig. 1 dargestellte Sensor 10 weist zwei Elektroden 1 und 2, einen Festelektrolyten 4 und ein Heizelement 5 auf. Bei dem hier dargestellten Ausführungsbeispiel ist der Festelektrolyt 4 becherförmig ausgebildet und aus stabilisiertem Zirkoniumdioxid gefertigt. Erfindungsgemäß besteht die Möglichkeit, den Festelektrolyten 4 auch mit einer anderen geometrischen Form auszubilden. Auf der nach außen gerichteten Oberfläche 4A des Festelektrolyten 4 ist die erste Elektrode 1 angeordnet. Die zweite Eletrode 2 befindet sich auf seiner Innenfläche 4I. Das Heizelement 5 ist im Inneren des Festelektrolyten 4 angeordnet. Die Elektrode 1 wird von dem zu untersuchenden Abgas beaufschlagt. Sie ist aus einem Material gefertigt, das elektrokatalytisch aktiv ist, und die elektrochemische Reaktion von Wasserstoff mit Sauerstoffionen aus dem Festelektrolyten 9 begünstigt. Vorzugsweise ist die Elektrode 1 aus einer Platinverbindung oder einer binären oder ternären Legierung aus den Elementen Platin, Gold, Nickel, Kupfer, Rhodium, Ruthenium, Pladium oder Titan gefertigt. Um eine stabile Elektrodenstruktur zu erhalten, ist es sinnvoll, die verwendeten Materialien in Form einer Mehrfachlagenstruktur auf den Festelektrolyten 4 aufzubringen. Der Legierungsschritt erfolgt in diesem Fall erst nach dem getrennten Aufbringen der zur Ausbildung der Elektrode 1 erforderlichen Materialien. Hierdurch ist es möglich, die Langzeitstabilität beeinflussende Diffusion von Elektrodenmaterial in den Festelektrolyten 4 zu blockieren. Erfindungsgemäß besteht die Möglichkeit, die Elektrode 1 auch aus einem Perowskit, Metallsiliciden, einem Spinell oder einem Metalloxid herzustellen, das die obengenannten Eigenschaften aufweist. Der zweiten Elektrode 2, die aus Platin gefertigt wird, wird ein Referenzgas zugeführt, dessen Sauerstoffgehalt bekannt ist. Eine Wand 11 trennt das Abgas (hier nicht dargestellt) von dem Referenzgas (hier nicht dargestellt). Zur Ermittlung des Wasserstoffgehaltes in einem Abgas wird selbiges der Elektrode 1 zugeführt. Ist der Sauerstoffgehalt des Abgases bekannt, so wird die Arbeitstemperatur des Sensors 10 auf einen Wert von 500° bis 700°C eingestellt. Der im Abgas enthaltene Wasserstoff reagiert an der Phasengrenze zwischen der Elektrode 1 und dem Festelektrolyten 4 in einer elektrochemischen Reaktion unter Entladung der Sauerstoffionen zu Wasser. Durch die elektrochemische Wasserstoffoxidation und die Sauerstoffreduktion bildet sich zwischen den Elektroden 1 und 2 eine elektromotorische Kraft aus. Der Einfluß des zu messenden Gasbestandteils, in diesem Fall des Wasserstoffs, auf die Größe des Potentials, das sich zwischen den Elektroden 1 und 2 ausbildet, ist unter anderem abhängig von den chemisch katalytischen Eigenschaften der Elektrode 1, und der Enthalpie der stattfindenden Reaktion des Wasserstoffs mit den Sauerstoffionen 1 des Festelektrolyten. In Fig. 5 ist eine Kennlinie für eine Elektrode 1 dargestellt, die aus Platin und Gold gefertigt ist. Dieser wurde ein Abgas zugeführt wird, das 2% Sauerstoff enthält. Das sich zwischen den Elektroden 1 und 2 ausbildende Mischpotential kann anhand dieser Kennlinie abgelesen werden, und zwar in Abhängigkeit von der jeweiligen Konzentration des Wasserstoffs im Abgas. In dieser Abbildung ist ferner die entsprechende Abhängigkeit für Kohlenmonoxid dargestellt, die zeigt, daß ein selektiver Nachweis des Wasserstoffs mit dieser Sonde erfolgen kann. Da das Potential auch von der Sauerstoffkonzentration abhängt, kann der Wasserstoffanteil des Abgases bei Kenntnis der Sauerstoffkonzentration aus einer Schar von Kennlinien, wie sie in Fig. 5 dargestellt sind, bestimmt werden.

Um die Elektrode 1 vor Verschmutzungen zu schützen, ist auf ihrer Oberfläche eine Schutzschicht 7 angeordnet, die beispielsweise aus Zirkoniumdioxid bestehen kann, das mit Yttrium- oder Ytterbiumoxid stabilisiert ist. Ist der Sauerstoffgehalt in dem zu messenden Abgas nicht bekannt, so wird der Sensor 10 alternierend bei einer Temperatur von größer 800°C und einer Temperatur zwischen 500°C und 700°C betrieben. Bei einer Arbeitstemperatur von mehr als 800° kann mit dem Sensor 10 der Sauerstoffgehalt des Abgases ermittelt werden. Die Oberflächenaktivität der Elektrode 1 ist dann so hoch, daß die brennbaren Gase bereits durch den Sauerstorf des Abgases oxidiert werden und sich kein Mischpotential mehr ausbilden kann. Beim anschließenden Betreiben des Sensors 10 bei einer Temperatur zwischen 500° und 700°C läßt sich, wie bereits oben beschrieben, der Anteil an Wasserstoff im Abgas bestimmen. Die sich zwischen den beiden Elektroden 1 und 2 ausbildende Spannung kann an den elektrisch leitenden Anschlüssen 1A und 2A der beiden Elektroden abgegriffen werden.

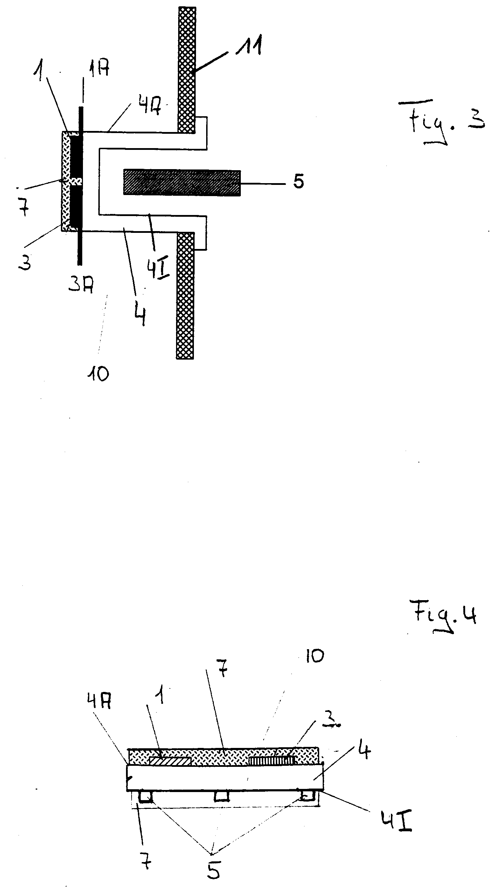

Fig. 2 zeigt einen weiteren Sensor 10, der im wesentlichen so aufgebaut ist, wie der in Fig. 1 dargestellte Sensor 10. Gleiche Bauteile sind deshalb mit gleichen Bezugszeichen versehen. Im Unterschied zu dem in Fig. 1 dargestellten Sensor, weist der Festelektrolyt 4 auf seiner dem Abgas zugewandten Oberfläche 4A eine dritte Elektrode 3 auf. Diese ist aus einem Material gefertigt, das bereits bei einer Arbeitstemperatur des Sensors 10 von 500 bis 700°C eine hohe Oberflächenaktivität in Bezug auf die Oxidation der brennbaren Gasbestandteile des Abgases besitzt. Die dritte Elektrode 3 ist vorzugsweise aus Platin oder einer Platinverbindung bzw. einer Legierung aus Platin und Silber gefertigt. Die beiden Elektroden 1 und 3 sind im Abstand voneinander auf der Oberfläche 4 A des Festelektrolyten 4 angeordnet und mit elektrischen Anschlußelementen 1A und 3A versehen. Sind in dem zu messenden Abgas sowohl Sauerstoff als auch Wasserstoff enthalten, bildet sich zwischen den Elektroden 1 und 2 eine Spannung aus, die sowohl durch die elektrokatalytische Oxidation des Sauerstoffs als auch durch die Reaktion des Wasserstoffs mit den Sauerstoffionen aus dem Festelektrolyten 4 hervorgerufen wird. Zwischen den Elektroden 2 und 3 bildet sich hingegen eine Spannung aus, die nur von der Konzentration des Sauerstoffs im Abgas bestimmt ist. Mit dieser Anordnung ist die gleichzeitige Messung der Sauerstoffkonzentration und des Mischpotentials möglich. Aus den gemessenen Spannungssignalen kann dann der Anteil des Waserstoffs im Abgas ermittelt werden.

Fig. 3 zeigt eine Variante des in Fig. 2 dargestellten und in der zugehörigen Beschreibung erläuterten Sensors. Der Sensor 10 gemäß Fig. 3 weist zwei Elektroden 1 und 3 auf, die im Abstand auf der nach außen gerichteten Oberfläche 4 A des becherförmig ausgebildeten Festelektrolyten 4 angeordnet sind. Die beiden Elektroden 1 und 3 sind von einer Schutzschicht 7 umgeben, die aus einem Material gefertigt ist, wie es in der Beschreibung zu Fig. 1 erläutert ist. Die Elektrode 1 ist auch hierbei aus einem elektrokatalytisch aktiven Material gefertigt, das die Reaktion des Wasserstoffs mit Sauerstoffionen aus dem Festelektrolyten 4 begünstigt. Die Elektrode 3 ist elektrokatalytisch inaktiv. An den beiden elektrischen Anschlußelementen 1A und 3A des Sensors 10 kann eine Spannung abgegriffen werden, die aus der Differenz zwischen dem Mischpotential an der Elektrode 1 und dem Sauerstoffpotential an der Elektrode 3 resultiert. In Abhängigkeit vom gewählten Material der Elektroden 1 und 3 und der Arbeitstemperatur kann dadurch zumindest über einen Sauerstoffkonzentrationsbereich von 2 bis 3% ein vom Sauerstoffgehalt nahezu unabhängiges Verhalten des Sensors 10 erreicht werden.

Fig. 4 zeigt eine flächige Ausführungsform des in Fig. 3 dargestellten Sensors 10. Der Festelektrolyt 4 ist als flächiges Element ausgebildet, und aus dem eingangs beschriebenen Material gefertigt. Die Elektroden 1 und 3 sind ebenfalls als flächige Elemente ausgebildet. Sie sind in definiertem Abstand voneinander auf der Oberfläche 4A des Festelektrolyten 4 angeordnet und von einer Schutzschicht 7 umgeben. Diese ist aus einem Material gefertigt, wie es in der Beschreibung zu Fig. 1 erläutert ist. Die Elektroden 1 und 3 sind den zu prüfenden Abgas ausgesetzt. Auf der zweiten Oberfläche 4I des Festelektrolyten 4 befinden sich Leiterbahnen 5, die als Heizelemente dienen. Die Heizelemente 5 sind ebenfalls von einer Schutzschicht 7 umgeben.

**Patentansprüche**

1. Sensor zur Kontrolle von Abgasen aus Verbrennungsprozessen mit wenigstens zwei Elektroden (1 und 2) und einem Festelektrolyten (4), dessen erste Oberfläche (4A) mit dem Abgas und dessen zweite Oberfläche (4B) mit einem Referenzgas beaufschlagt ist, dadurch gekennzeichnet, daß wenigstens eine Elektrode (1) mit dem zu messenden Abgas in Kontakt steht, und zudem elektrokatalytische Eigenschaften aufweist, welche die Reaktion von oxidierbaren gasförmigen Bestandteilen im Abgas mit Sauerstoffionen zulassen.

2. Sensor nach Anspruch 1, dadurch gekennzeichnet, daß die erste Elektrode (1) mit dem zu messenden Abgas in Kontakt steht, und zudem elektrokatalytische Eigenschaften aufweist, welche die Reaktion von Wasserstoff mit Sauerstoffionen aus dem Festelektrolyten (4) zulassen.

3. Sensor nach Anspruch 1 oder 2, dadurch gekennzeichnet, daß die erste Elektrode (1) aus einem Perowskit, einer Perowskitverbindung, einem Spinell oder einem Metalloxid gefertigt ist.

4. Sensor nach einem der Ansprüche 1 bis 4, dadurch gekennzeichnet, daß die erste Elektrode (1) aus einer binären oder ternären Legierungen aus den Elementen, Platin, Gold, Nikkel, Kupfer, Rhodium, Ruthenium, Paladium oder Titan gefertigt ist.

5. Sensor nach einem der Ansprüche 1 bis 4, dadurch gekennzeichnet, daß die erste Elektrode (1) mehrschichtig aus den hierfür vorgesehenen Materialien gefertigt ist.

6. Sensor nach einem der Anspruch 1, dadurch gekennzeichnet, daß die zweite Elektrode (2) aus Platin gefertigt ist und mit dem Referenzgas in Kontakt steht.

7. Sensor nach einem der Ansprüche 1 bis 6, dadurch gekennzeichnet, daß eine dritte Elektrode (3) ebenfalls mit dem zu messenden Abgas in Kontakt steht, und zur Ermittlung des Sauerstoffgehalts in dem Abgas vorgesehen ist, und daß die dritte Elektrode (3) in Bezug auf die Elektrokatalyse von Wasserstoff an der Phasengrenze zum Festelektrolyten (4) inaktiv und aus einem Edelmetall, einem Metalloxid, einem Spinell oder einem Perowskit gefertigt ist.

8. Sensor nach Anspruch 7, dadurch gekennzeichnet, daß die dritte Elektrode (3) aus Platin oder einer Platinlegierung, die Silber enthält, gefertigt ist.

9. Sensor nach einem der Ansprüche 1 bis 8, dadurch gekennzeichnet, daß der Festelektrolyt (4) aus stabilisiertem Zirkoniumdioxid gefertigt und als zylinderförmiges Rohr mit einem geschlossenen Ende oder als ebene Fläche ausgebildet ist, und daß die erste und die dritte Elektrode (1 und 3) auf der ersten Oberfläche (4A) des Festelektrolyten (4) angeordnet sind, und daß die zweite Elektrode (2) auf der zweiten Oberfläche (4I) des Festelektrolyten (4) installiert ist.

10. Sensor nach Anspruch 9, dadurch gekennzeichnet, daß auf der zweiten Oberfläche (4I) des Festelektrolyten (4) als Heizung dienende, keramisch isolierte Leiterbahnen (5) angeordnet sind, und daß die Elektroden (1 und 3) sowie die Leiterbahnen (5) von jeweils einer Schutzschicht (7) umgeben sind, die in Bezug auf die chemische Katalyse von Wasserstoff inaktiv ist, und daß die Schutzschichten (7) aus einem Spinell oder einem durch Yttrium- oder Ytterbiumoxid stabilisierten Zirkoniumdioxid gefertigt sind.

Fig. 1

Fig. 2

Fig. 3

Fig. 4

Fig. 5

Pt/Ag - Legierung
T = 570 C